# EUROPÄISCHE PATENTSCHRIFT

(11) **EP 0 884 966 B1**
(45) Veröffentlichungstag und Bekanntmachung des Hinweises auf die Patenterteilung: **15.12.1999**
(21) Anmeldenummer: 97903370.1
(22) Anmeldetag: 25.02.1997
(51) Int. Cl.: A47L 11/03, A47L 11/34, G05D 11/00

(54) **SYSTEM ZUR ANWENDUNGSGERECHTEN BEREITSTELLUNG EINER BODENREINIGUNGSFLÜSSIGKEIT**
SYSTEM FOR MAKING A FLOOR CLEANING LIQUID AVAILABLE IN A CONVENIENT MANNER
SYSTEME POUR MISE A DISPOSITION PRATIQUE D'UN LIQUIDE DE NETTOYAGE DES SOLS

(30) Priorität: 05.03.1996 DE 19608336; 17.06.1996 DE 19624053
(43) Veröffentlichungstag der Anmeldung: 23.12.1998
(73) Patentinhaber: HENKEL-ECOLAB GmbH & CO. OHG, 40589 Düsseldorf (DE)
(72) Erfinder: KOHL, Albert, CH-3012 Bern (CH); FREZAL, Jean-Claude, F-69760 Limonest (FR); BORTOLOTTI, Jean-Marc, F-69290 Grézieu-la-Varenne (FR); BERTRAND, Michel, F-84240 Vitrolles-en-Luberon (FR); ALVARO, Fernand, F-69530 Brignais (FR); DUFFAL, Pierre, F-69680 Chassieu (FR); GIULIANO, Jean-Marc, F-69440 St. Maurice-sur-Dargoire (FR)
(74) Vertreter: Hase, Christian, Dr.
(86) Internationale Anmeldenummer: EP9700889
(87) Internationale Veröffentlichungsnummer: WO9732513

(56) Entgegenhaltungen:
- EP-A- 0 062 010
- EP-A- 0 173 392
- CA-A- 1 190 008
- DE-A- 3 843 491
- US-A- 3 705 437
- US-A- 3 747 155
- US-A- 4 226 000
- US-A- 4 321 219
- US-A- 4 938 421

## Beschreibung

Die Erfindung betrifft ein System zur anwendungsgerechten Bereitstellung einer Bodenreinigungsflüssigkeit, das einen vorzugweise ortsfest angeordneten, großvolumigen Vorratstank für die Aufbereitung und/oder Bevorratung der Bodenreinigungsflüssigkeit, einen Vorratsbehälter für ein Reinigungsmittelkonzentrat und einen verfahrbaren Bodenreinigungsautomaten mit Tank für die Bodenreinigungsflüssigkeit umfaßt (siehe CA-A-1190 008).

Die gewerblichen Bodenreinigungsautomaten weisen Reinigungsmitteltanks mit einer Größe von bis zu 300 l Inhalt auf. Die bisher übliche Befüllung dieser Reinigungsmitteltanks über einen Wasserhahn aus dem Wasserleitungsnetz nimmt aufgrund dieses großen Volumens einen erheblichen Zeitbedarf von etwa 30 bis 40 Minuten in Anspruch, währenddessen der Bodenreinigungsautomat nicht zur Verfügung steht. Hinzu kommt, daß neben der Befüllung mit Wasser zusätzlich auch noch Reinungsmittel in abgemessener Menge zugegeben werden muß, was den Befüllvorgang weiter kompliziert.

Aufgabe der Erfindung ist es deshalb, eine Lösung zu schaffen, mit der die Befüllung des jeweiligen Flüssigkeitstanks von Bodenreinigungsautomaten wesentlich beschleunigt und vereinfacht werden kann.

Diese Aufgabe wird gelöst mit einem System zur anwendungsgerechten Bereitstellung einer Bodenreinigungsflüssigkeit, das einen vorzugsweise ortsfest angeordneten, großvolumigen Vorratstank für die Aufbereitung und/oder Bevorratung der Bodenreinigungsflüssigkeit, einen Vorratsbehälter für ein Reinigungsmittelkonzentrat und einen verfahrbaren Bodenreinigungsautomaten mit Tank für die Bodenreinigungsflüssigkeit umfaßt, wobei der Vorratstank wenigstens eine an ein Wasserleitungsnetz anschließbare Flüssigkeitszuleitung und wenigstens eine mit dem Tank des Bodenreinigungautomaten verbindbare Flüssigkeitsableitung aufweist sowie mit einer Flüssigkeitsverbindungsleitung zu dem Vorratsbehälter in Leitungsverbindung steht, und wobei in einem Teilabschnitt der Flüssigkeitszuleitung oder dem Vorratstank zufließendes Wasser und Reinigungsmittelkonzentrat zur Bodenreinigungsflüsigkeit vermischbar sind, und wobei weiterhin der Vorratstank derart in einem Gestell angeordnet ist, das sich eine Vorratstankabflußöffnung für die Flüssigkeitsableitung oberhalb des Tanks des Bodenreinigungsautomaten befindet und der Flüssigkeitsstrom der Bodenreinigungsflüssigkeit aus dem Vorratstank in den Tank des Bodenreinigungsautomaten allein schwerkraftbedingt ist, und wobei schließlich der Vorratstank mindestens ein dem Volumen des Tanks des Bodenreinigungsautomaten entsprechendes Volumen aufweist und die Vorratstankabflußöffnung und die Flüssigkeitsableitung mindestens derart dimensioniert sind, daß die Befüllzeit für den Tank des Bodenreinigungsautomaten 0,5 - 4 Minuten, vorzugsweise 1 - 2 Minuten, beträgt.

Mit der Erfindung wird somit in einem Vorratstank ein Reservoir an Bodenreinigungsflüssigkeit zur Verfügung gestellt, aus welchem bei Bedarf über die Flüssigkeitsableitung der jeweilige Tank des Bodenreinigungsautomaten in ausgesprochen kurzer Zeit mit Bodenreinigungsflüsigkeit gefüllt werden kann. Wird beispielsweise eine schlauchförmige Flüssigkeitsableitung mit einem Querschnitt von 50 - 80 mm eingesetzt, ist eine Befüllzeit von nur etwa 1 - 2 Minuten notwendig, das heißt es ergibt sich eine erhebliche Verkürzung der Befüllzeit gegenüber der gängigen direkten Füllung aus einem Wasserleitungsnetz (ca. 30 bis 40 Minuten). Außerdem wird ersichtlich der Befüllvorgang noch dadurch vereinfacht, daß im Vorratstank selbst die fertige Bodenreinigungsflüssigkeit bevorratet wird und nicht Reinigungsmittelkonzentrat erst unmittelbar beim Füllvorgang des jeweiligen Bodenreinigungsautomaten dem Wasser zugemischt werden muß. Der Vorratstank kann dabei bevorzugt allein rein mechanisch arbeitende Elemente aufweisen, die den Zu- und Abfluß der in ihm aufbereiteten und/oder bevorrateten Flüssigkeiten bewirken. Diese Elemente bzw. der Vorratstank muß demnach nicht am Stromnetz betrieben werden, so daß eine Abnahme durch entsprechende Prüfstellen entbehrlich ist.

In vorteilhafter Ausgestaltung ist vorgesehen, daß die Flüssigkeitszuleitung über eine Ventileinheit in den Vorratstank mündet, wobei die Ventileinheit in Abhängigkeit vom Füllstand im Vorratstank automatisch öffnet bzw. schließ. Es ist dadurch eine vollautomatische Befüllung des Vorratstanks möglich, was die Handhabung entsprechend erleichtert. Sobald zur Flüssigkeitsbefüllung eines Bodenreinigungsautomaten Bodenreinigungsflüssigkeit aus dem Vorratstank entnommen wird, füllt sich dieser selbsttätig wieder auf.

In besonders vorteilhafter Ausgestaltung ist eine vollautomatische Befüllung des Vorratsbehälters dadurch möglich, daß die Ventileinheit aus einem Elektromagnetventil besteht, das über eine elektrische Leitung mit einem Sensor oder elektrischen Schaltelement in Wirkverbindung steht, welcher Sensor oder welches elektrische Schaltelement im oberen Bereich des Vorratstanks zur Erfassung des höchsten vorgesehenen Flüssigkeitsstandes angeordnet ist und bei Kontakt mit der Bodenreinigungsflüssigkeit im Tank über die elektrische Leitung einen elektrischen Impuls an das Elektromagnetventil abgibt, derart, daß das Ventil in Abhängigkeit vom Füllstand im Vorratstank automatisch öffnet bzw. schließt. Sobald zur Flüssigkeitsbefüllung eines Bodenreinigungsautomaten dem Vorratstank Bodenreinigungsflüssigkeit entnommen wird, füllt sich dieser selbsttätig wieder auf. Hierzu dient das mit dem Sensor oder dem elektrischen Schaltelement in Wirkverbindung stehende Magnetventil.

Um einen direkten und ständigen Anschluß an ein Wasserleitungsnetz zu ermöglichen, ist vorgesehen, daß in der Flüssigkeitszuleitung eine Rücklaufsperre angeordnet ist, welche verhindert, daß die im Vorratstank oder der Flüssigkeitszuleitung befindliche Bodenreinigungsflüssigkeit in das Wasserleitungsnetz gelangen kann.

Um eine automatische selbsttätige Zubereitung der Bodenreinigungsflüssigkeit zu erreichen, ist weiterhin vorteilhaft vorgesehen, daß stromabwärts der Rücklaufsperre in der Flüssigkeitszuleitung ein Injektor angeordnet ist, welcher über die Flüssigkeitverbindungsleitung mit dem Vorratsbehälter verbunden ist.

Dabei ist bevorzugt vorgesehen, daß in die Flüssigkeitsverbindungsleitung eine auswechselbare Düse integriert ist. Durch die Größe der Düse wird die Konzentration der Reinigungslösung (Bodenreinigungsflüssigkeit) fest vorgegeben, durch einfachen Austausch der Düse läßt sich je nach verwendetem Reinigungsmittel die Konzentration auf einfache Weise verändern.

Um eine automatische selbsttätige Zubereitung der Bodenreinigungsflüssigkeit zu erreichen, ist alternativ weiterhin vorteilhaft vorgesehen, daß stromabwärts der Rücklaufsperre in der Flüssigkeitszuleitung eine Pumpe angeordnet ist, welche über die Flüssigkeitsverbindungsleitung mit dem Vorratsbehälter verbunden ist.

Durch ein in der Flüssigkeitsverbindungsleitung vorgesehenes Rückschlagventil wird gemäß Weiterbildung der Erfindung verhindert, daß verdünntes Reinigungsmittel (Bodenreinigungsflüsssigkeit) in den Vorratsbehälter für das Reinigungsmittelkonzentrat gelangen kann.

Zur Vereinfachung der Handhabung sieht die Erfindung in weiterer Ausgestaltung vor, daß die Flüssigkeitsableitung mit einem Verschluß versehen ist, welcher beispielsweise als Kugelhahn ausgebildet sein kann.

Vorzugsweise ist oberhalb des maximal zulässigen Füllstandes des Vorratstanks ein Überlaufabfluß vorgesehen. Bei Störung der Ventileinhelt oder des Sensor-Ventil-Systems ist dann gewährleistet, daß der Vorratstank nicht überläuft, sondern die Bodenreinigungsflüssigkeit in einen Abfluß geleitet wird.

Dabei ist es besonders vorteilhaft, wenn der Überlaufabfluß unterhalb der Auslaßöffnung der Flüssigkeitszuleitung angeordnet ist, was die Erfindung in weiterer Ausgestaltung schließlich auch noch vorsieht. Dadurch wird zusätzlich gewährleistet, daß keine Flüssigkeit zurück in das Leitungswassernetz gelangen kann.

Die Erfindung ist nachstehend anhand der Zeichnung beispielsweise näher erläutert. Diese zeigt in vereinfachter Darstellung in
Figur 1 eine Seitenansicht eines ersten Ausführungsbeispieles eines erfindungsgemäßen Systems,
Figur 2 ein vergrößertes Detail des Systems nach Figur 1 und in
Figur 3 schematisch ein zweites Ausführungsbeispiel eines erfindungsgemäßen Systems.

Ein erstes Ausführungsbeispiel eines erfindungsgemäßen Systems zur anwendungsgerechten Bereitstellung einer Bodenreinigungsflüssigkeit weist zunächst einen Vorratstank 1 auf, der mit einer Flüssigkeitszuleitung 5 und einer Flüssigkeitsableitung 20 versehen ist. Der Vorratstank 1 ist dabei auf einem Gestell 2 befestigt und in einem so weiten Abstand von der Bodenfläche angeordnet, daß sich die Unterseite des Vorratstanks und damit die Vorratstankabflußöffnung 20a der Flüssigkeitsableitung 20 oberhalb des Tanks 22 des mit Bodenreinigungsflüssigkeit 25 zu befüllenden Bodenreinigungsautomaten 19 befindet, so daß bei Entnahme von Bodenreinigungsflüssigkeit 25 aus dem Vorratstank 1 über die Flüssigkeitsableitung 20 der Flüssigkeitsstrom in den Tank 22 des Bodenreinigungsautomaten 19 allein aufgrund der Schwerkraft erfolgt.

Die Flüssigkeitszuleitung ist endseitig an ein normal es Leitungswassernetz angeschlossen, was durch einen Wasserhahn 4 symbolisiert wird. Die Ankupplung kann dabei mit einer normalen Schlauchkupplung erfolgen. Die Flüssigkeitszuleitung 5 mündet über ein allgemein mit 3 bezeichnetes Dosiersystem in den Vorratstank 1, wobei dieses Dosiersystem 3 vorzugsweise auf dem Deckel 1 a des Vorratstanks 1 aufgebaut ist.

Zu diesem Dosiersystem 3 gehört zunächst eine in die Zuleitung 5 integrierte Ventileinheit, die allgemein mit 6 bezeichnet ist. Diese Ventileinheit 6 besteht aus einem modifizierten Elekromagnetventil. Anstelle der üblichen Magnetspule ist dabei eine Brücke 7 mit Ringmagneten montiert, welche das Ventil in Ruhestellung offen halten. Die Brücke 7 ist über eine Führung 8 mit einem Schwimmer 9 verbunden, der sich im Vorratstank 1 befindet und an der Flüssigkeitsoberfläche im Vorratstank schwimmt. Bei maximalem Füllstand des Vorratstanks 1 schiebt der Schwimmer 9 die Brücke 7 nach oben und schließt dadurch das Ventil. In Abhängigkeit vom Füllstand des Vorratstanks 1 öffnet bzw. schließt hiermit die Ventileinheit 6 automatisch, so daß entsprechend automatisch Wasser aus dem Wasserleitungsnetz in den Vorratstank 1 nachgefüllt wird.

Stromabwärts der Ventileinheit 6 ist in der Flüssigkeitszuleitung 5 eine Rücklaufsperre angeordnet, die im dargestellten Ausführungsbeispiel als Rohrtrenner 10 ausgebildet ist. Dieser Rohrtrenner 10 verhindert ein Rückfließen von Bodenreinigungsflüssigkeit 25 aus dem Vorratstank 1 und dem stromabwärts der Rücklaufsperre 10 befindlichen Teil der Flüssigkeitszuleitung 5 in das Leitungswassernetz.

Stromabwärts dieser Rücklaufsperre 10 ist in der Flüssigkeitszuleitung 5 ein Injektor 11 angeordnet. Der Injektor 11 ist über eine Flüssigkeitsverbindungsleitung 12 mit einem Vorratsbehälter 14 für Reinigungsmittelkonzentrat 27 verbunden, wobei in die Flüssigkeitsverbindung 12 ein Rückschlagventil 13 integriert ist. Bei Durchströmen des Injektors 11 wird über die Flüssigkeitsverbindung 12 Reinigungsmittelkonzentrat 27 aus dem Vorratsbehälter 14 angesaugt und dem Wasser beigemischt, derart, daß aus dem freien Auslauf 17 der Flüssigkeitszuleitung 5 die anwendungsgerecht gemischte Bodenreinigungsflüssigkeit 25 in den Vorratstank einströmt.

In der Verbindungsleitung 12 ist vorzugsweise eine Steckkupplung 15 mit einer auswechselbaren Düse 16 vorgesehen. Durch die Größe dieser Düse 16 ist die Konzentration der Bodenreinigungsflüssigkeit fest vorgegeben. Soll diese Konzentration verändert werden, beispielsweise wenn ein anderes Reinigungsmittelkonzentrat eingesetzt wird, läßt sich auf einfache Weise die Düse 16 auswechseln.

Die Flüssigkeitszuleitung 5 mündet stromabwärts des Injektors 11 über den freien Auslauf 17 in den Vorratsbehälter 1.

Oberhalb des maximalen Füllstandes im Vorratstank 1 ist ein Überlaufabfluß 18 mit einem Überlaufschlauch 24 angeordnet, durch welchen bei Nichtfunktionieren des Schimmersystems die Bodenreinigungsflüssigkeit 25 in einen angedeuteten Abfluß geführt wird. Erkennbar befindet sich der freie Auslauf 17 des Injektors 11 oberhalb dieses Überlaufabflusses, wodurch zusätzlich gewährleistet, daß keine Bodenreinigungsflüssigkeit 25 zurück in das Leitungs (Trinkwasser)-Netz gelangen kann.

Soll der Tank 22 für Bodenreinigungsflüssigkeit 25 eines Bodenreinigungsautomaten 19 mit Bodenreinigungsflüssigkeit 25 gefüllt werden, wird die Flüssigkeitsableitung 25 mit ihrem freien Ende entsprechend in den Tank 22 des Bodenreinigungsautomaten 19 eingehängt und anschließend ein Verschluß 21 der Flüssigkeitsableitung 20 geöffnet, wobei dieser Verschluß vorzugsweise als Kugelhahn ausgebildet ist. Allein aufgrund der Schwerkraft fließt dann die Bodenreinigungsflüssigkeit 25 aus dem Vorratstank 1 in den Flüssigkeitstank 22 des Bodenreinigungsautomaten 19. Bei Verwendung einer Flüssigkeitsableitung 20 mit einem Querschnitt von etwa 50 bis 80 mm und einer entsprechenden Ausbildung der Vorratstankabflußöffnung 20a läßt sich ein Flüssigkeitstank eines Bodenreinigungsautomaten 19 mit einem Füllvolumen von 200 l in etwa 1 bis 2 Minuten komplett füllen.

Da während dieses Füllvorganges der Flüssigkeitsspiegel im Vorratstank 1 absinkt, wird automatisch durch das Dosiersystem 3 (sinkender Schimmer 9) über die Flüssigkeitszuleitung 5 aus dem Leitungsnetz Wasser nachgefüllt, wobei gleichzeitig in der vorgeschriebenen Weise eine Zudosierung von Reinigungsmittelkonzentrat 27 erfolgt.

Im Vorratstank 1 wird die Bodenreinigungsflüssigkeit 25 anwendungsgerecht aufbereitet und bevorratet, bevor sie dann in den Tank des Bodenreinigungsautomaten 19 eingefüllt und anwendungsgerecht für die unmittelbar folgende Verwendung bereitgestellt wird.

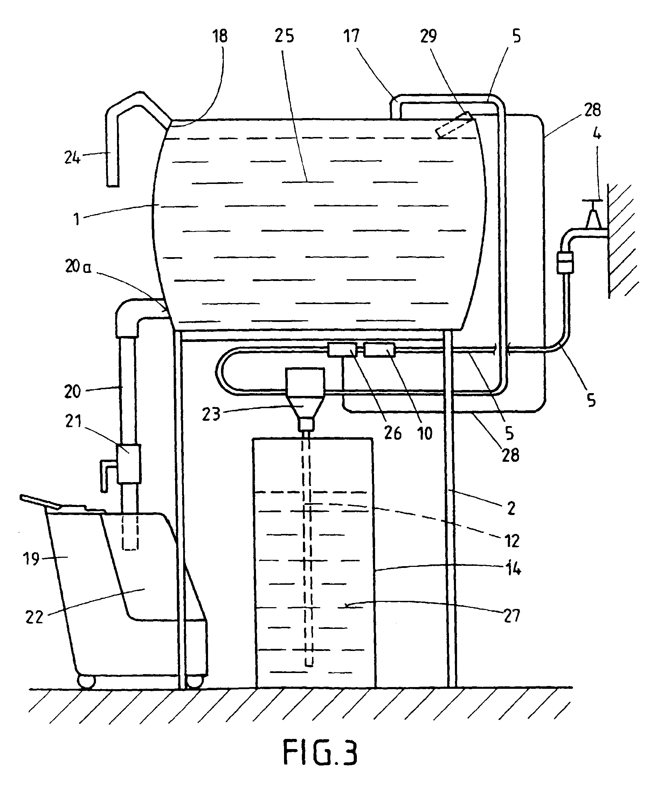

In Figur 3 ist ein zweites Ausführungsbeispiel eines erfindungsgemäßen Systems dargestellt. Dieses unterscheidet sich lediglich in der Art und Weise, wie Wasser und Reinigungsmittelkonzentrat 27 zu der Bodenreinigungsflüssigkeit 25 vermischt werden und wie ein automatisches Nachfüllen des Vorratstanks 1 bewirkt wird.

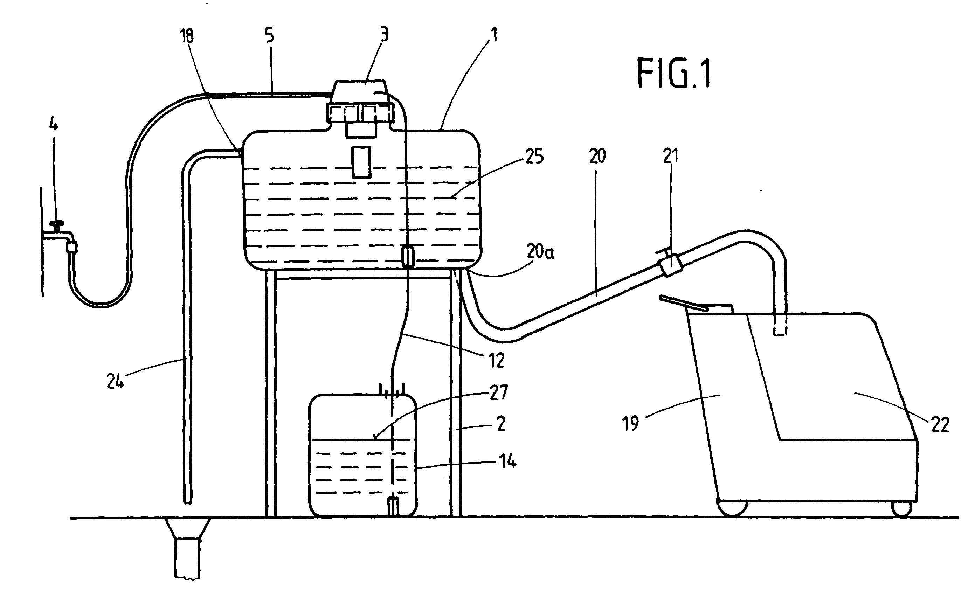

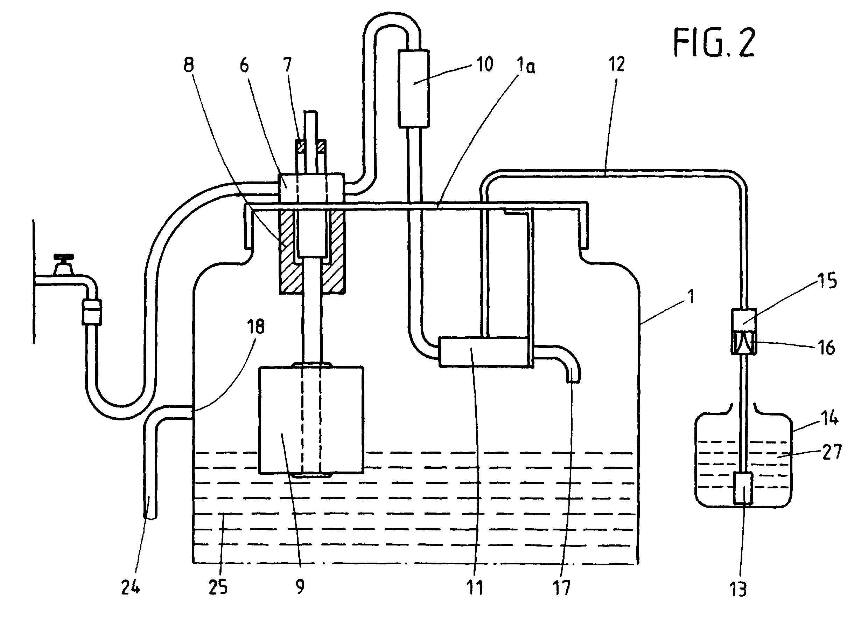

Zu im Zusammenhang mit den Figuren 1 und 2 beschriebenen Elementen identische oder gleichwirkende Elemente sind nachfolgend mit denselben Bezugszeichen versehen.

Auch das zweite, in Figur 3 dargestellte Ausführungsbeispiel eines Systems zur anwendungsgerechten Bereitstellung einer Bodenreinigungsflüsigkeit 25 in einem Tank 22 eines Bodenreinigungsautomaten 19 weist zunächst einen Vorratstank 1 mit rund 300 l Fassungsvermögen auf, der mit einer Flüssigkeitszuleitung 5 und einer Flüssigkeitsableitung 20 versehen ist. Der Vorratstank 1 ist dabei auf einem Gestell 2 befestigt und in einem so weiten Abstand von der Bodenfläche angeordnet, daß sich die Unterseite des Vorratstanks und damit die Vorratstankabflußöffnung 20a der Flüssigkeitsableitung 20 oberhalb des Tanks 22 des zu befüllenden Bodenreinigungsautomaten 19 befindet, so daß bei Entnahme von Bodenreinigungsflüssigkeit 25 aus dem Vorratstank 1 über die Flüssigkeitsableitung 20 der Flüssigkeitsstrom in den Bodenreinigungsautomaten 19 allein aufgrund der Schwerkraft erfolgt.

Die Flüssigkeitszuleitung ist einseitig an ein normales Leitungswassernetz angeschlossen, was durch den Wasserhahn 4 symbolisiert ist. Die Ankupplung kann dabei mit einer normalen Schlauchkupplung erfolgen. Die Flüssigkeitszuleitung 5 mündet oberseitig in den Vorratstank 1. In der Flüssigkeitszuleitung 5 ist ein Dosiersystem angeordnet.

Zu diesem Dosiersystem gehört zunächst ein in die Zuleitung 5 integriertes Elektromagnetventil 26. Dieses Elektromagnetventil 26 steht über eine Elektroleitung 28 mit einem Sensor oder elektrischen Schaltelement 29 in Verbindung, welches im oberen Bereich des Flüssigkeitsvorratstanks 1 zur Erfassung des höchsten vorgesehenen Flüssigkeitsstandes angeordnet ist. Bei maximalem Füllstand des Vorratstanks 1 gibt das Element 29 einen elektrischen Impuls über die Leitung 28 an das Magnetventil 26 und schließt dadurch das Ventil. In Abhängigkeit vom Füllstand des Vorratstanks 1 öffnet bzw. schließt das Ventil 26 automatisch, so daß entsprechend automatisch Wasser aus dem Wasserleitungsnetz in den Vorratstank 1 nachgefüllt wird. Der Anschluß des Elektromagnetventils 26 an eine Spannungsquelle ist nicht dargestellt.

Stromaufwärts des Ventils 26 ist in der Flüssigkeitszuleitung 5 eine Rücklaufsperre 10 angeordnet. Diese als Rohrtrenner ausgebildete Rücklaufsperre 10 verhindert ein Rückfließen von Flüssigkeit aus dem Vorratstank 1 in den stromabwärts der Rücklaufsperre 10 befindlichen Teil der Flüssigkeitszuleitung 5 in das Leitungswassernetz.

Stromabwärts von Rücklaufsperre 10 und Elektromagnetventil 26 ist in der Flüssigkeitszuleitung 5 eine Pumpe 23 angeordnet, die als Proportionalpumpe oder volumetrische Pumpe ausgebildet ist. Die Pumpe 11 ist über die Flüssigkeitsverbindungsleitung 12 mit einem Vorratsbehälter 14 für Reinigungsmittelkonzentrat 27 verbunden. In der Flüssigkeitsverbindungsleitung 12 kann ein nicht dargestelltes Rückschlagventil angeordnet sein. Sobald Wasser aus dem Leitungsnetz die Pumpe 23 durchströmt wird über die Leitung 12 Reinigungskonzentrat 27 aus dem Vorratsbehälter 14 angesaugt und dem Wasser in der Flüssigkeitsleitung 5 beigemischt. Es werden 0,5 bis 4 Volumenprozent an Reinigungsmittelkonzentrat zugegeben. Die gewünschte Zugabemenge/Zugabevolumen ist an der Pumpe 23 einstellbar.

Die Flüssigkeitszuleitung 5 mündet stromabwärts der Pumpe 23 über einen Auslauf 17 in den Vorratstank 1.

Oberhalb des maximal zulässigen Füllstandes im Vorratstank 1 ist ein Überlaufabfluß 18 mit einem Überlaufschlauch 24 angeordnet, durch welchen bei Nichtfunktionieren des Sensor-Ventil-Systems 29, 26 die Flüssigkeit in einen nicht dargestellten Abfluß geführt wird. Erkennbar befindet sich der Auslauf 17 der Leitung 5 oberhalb des Überlaufabflusses 18, wodurch zusätzlich gewährleistet ist, daß keine Bodenreinigungsflüssigkeit 25 zurück in das Leitungs (Trinkwasser)-Netz gelangen kann.

Soll der Tank 22 für Bodenreinigungsflüssigkeit 25 eines Bodenreinigungsautomaten 19 mit Reinigungsflüssigkeit gefüllt werden, wird die Flüssigkeitsableitung 20 mit ihrem freien Ende entsprechend in den Flüssigkeitstank 22 des Bodenreinigungsautomaten eingehängt und anschließend ein Verschluß 21 der Flüssigkeitsableitung 22 des Bodenreinigungsautomaten 19 geöffnet, wobei dieser Verschluß vorzugsweise als Kugelhahn ausgebildet ist. Allein aufgrund der Schwerkraft fließt dann die Reinigungsflüssigkeit aus dem Vorratstank 1 in den Flüssigkeitstank 22 des Bodenreinigungsautomaten 19. Bei Verwendung einer Flüssigkeitsableitung 20 mit einem Querschnitt von etwa 50 bis 80 mm und entsprechender Ausgestaltung der Vorratstankabflußöffnung 20a läßt sich ein Flüssigkeitstank 22 eines Bodenreinigungsautomaten 19 mit einem Füllvolumen von 150 l in etwa 1 Minute und von 300 l in etwa 2 Minuten komplett füllen. Es ist sogar ein Volumenstrom von rund 200 l/Min. möglich, der auch bei dem ersten Ausführungsbeispiel erreichbar ist.

Da während dieses Füllvorgangs der Flüssigkeitsspiegel im Vorratsbehälter 1 absinkt, wird automatisch durch das Sensor-Ventil-System 29, 26 über die Flüssigkeitszuleitung 5 aus dem Leitungsnetz Wasser nachgefüllt, wobei gleichzeitig in der vorbeschriebenen Weise mittels der Pumpe 23 eine Zudosierung von Reinigungsmittelkonzentrat 27 erfolgt.

Anstelle der Pumpe 23 kann auch in diesem Ausführungsbeispiel ein Injektor mit zugeordneter Düse in der Flüssigkeitszuleitung vorgesehen sein, der bei Durchströmen von Wasser nach den Prinzip von Wasserstrahlpumpen über die Flüssigkeitsverbindungsleitung 12 Reinigungsmittelkonzentrat 27 aus dem Vorratsbehälter 14 ansaugt und dem Wasser in der Flüssigkeitszuleitung 5 beimischt.

## Patentansprüche

1. System zur anwendungsgerechten Bereitstellung einer Bodenreinigungsflüssigkeit (25), das einen vorzugsweise ortsfest angeordneten, großvolumigen Vorratstank (1) für die Aufbereitung und/oder Bevorratung der Bodenreinigungsflüssigkeit (25), einen Vorratsbehälter (14) für ein Reinigungsmittelkonzentrat (27) und einen verfahrbaren Bodenreinigungsautomaten (19) mit Tank (22) für die Bodenreinigungsflüssigkeit (25) umfaßt,
wobei der Vorratstank (1) wenigstens eine an ein Wasserleitungsnetz anschließbare Flüssigkeitszuleitung (5) und wenigstens eine mit dem Tank (22) des Bodenreinigungsautomaten (19) verbindbare Flüssigkeitsableitung (20) aufweist sowie mit einer Flüssigkeitsverbindungsleitung (12) zu dem Vorratsbehälter (14) in Leitungsverbindung steht,
und wobei in einem Teilabschnitt der Flüssigkeitszuleitung (5) oder dem Vorratstank (1) zufließendes Wasser und Reinigungsmittelkonzentrat (27) zur Bodenreinigungsflüssigkeit (25) vermischbar sind,
und wobei weiterhin der Vorratstank (1) derart in einem Gestell (2) angeordnet ist, daß sich eine Vorratstankabflußöffnung (20a) für die Flüssigkeitsableitung (20) oberhalb des Tanks (22) des Bodenreinigungsautomaten (19) befindet und der Flüssigkeitsstrom der Bodenreinigungsflüssigkeit (25) aus dem Vorratstank (1) in den Tank (22) des Bodenreinigungsautomaten (19) allein schwerkraftbedingt ist, und wobei schließlich der Vorratstank (1) mindestens ein dem Volumen des Tanks (22) des Bodenreinigungsautomaten (19) entsprechendes Volumen aufweist und die Vorratstankabflußöffnung (20a) sowie die Flüssigkeitsableitung (20) mindestens derart dimensioniert sind, daß die Befüllzeit für den Tank (22) des Bodenreinigungsautomaten (19) 0,5 bis 4 Minuten, vorzugsweise 1 bis 2 Minuten, beträgt.

2. System nach Anspruch 1,
dadurch gekennzeichnet,
daß die Flüssigkeitszuleitung (5) über eine Ventileinheit (6) in den Vorratstank (1) mündet, wobei die Ventileinheit (6) in Abhängigkeit vom Füllstand im Vorratstank (1) automatisch öffnet bzw. schließt.

3. System nach Anspruch 1 oder 2,
dadurch gekennzeichnet,
daß die Ventileinheit aus einem Elektromagnetventil (26) besteht, daß über eine elektrische Leitung (28) mit einem Sensor oder elektrischen Schaltelement (29) in Wirkverbindung steht, welcher Sensor oder welches elektrische Schaltelement (29) im oberen Bereich des Vorratstanks (1) zur Erfassung des höchsten vorgesehenen Flüssigkeitsstandes angeordnet ist und bei Kontakt mit der Flüssigkeit im Vorratstank (1) über die elektrische Leitung (28) einen elektrischen Impuls an das Elektromagnetventil (26) abgibt, derart, daß das Ventil (26) in Abhängigkeit von Füllstand im Vorratstank (1) automatisch öffnet bzw. schließt.

4. System nach einem der vorangehenden Ansprüche,
dadurch gekennzeichnet,
daß in der Flüssigkeitszuleitung (5) eine Rücklaufsperre (10) angeordnet ist.

5. System nach einem der vorangehenden Ansprüche,
dadurch gekennzeichnet,
daß stromabwärts der Rücklaufsperre (10) in der Flüssigkeitszuleitung (5) ein Injektor (11) angeordnet ist, welcher über die Flüssigkeitsverbindungsleitung (12) mit dem Vorratsbehälter (14) verbunden ist.

6. System nach Anspruch 5,
dadurch gekennzeichnet,
daß in die Flüssigkeitsverbindungsleitung (12) eine auswechselbare Düse(16) integriert ist.

7. System nach einem der Ansprüche 1 bis 4,
dadurch gekennzeichnet,
daß stromabwärts der Rücklaufsperre (10) in der Flüssigkeitszuleitung (5) eine Pumpe (23) angeordnet ist, welche über die Flüssigkeitsverbindungsleitung (12) mit dem Vorratsbehälter (14) verbunden ist.

8. System nach einem der Ansprüche 5 bis 7,
dadurch gekennzeichnet,
daß die Flüssigkeitsverbindungsleitung (12) mit einem Rückschlagventil (13) versehen ist.

9. System nach einem der vorangehenden Ansprüche,
dadurch gekennzeichnet,
daß die Flüssigkeitsableitung (20) mit einem Verschluß (21) versehen ist.

10. System nach einem der vorangehenden Ansprüche,
dadurch gekennzeichnet,
daß oberhalb des maximal zulässigen Füllstandes des Vorratstanks (1) ein Überlaufabfluß (18) vorgesehen ist.

11. System nach Anspruch 10
dadurch gekennzeichnet,
daß der Überlaufabfluß (18) unterhalb der Auslaßöffnung (17) der Flüssigkeitszuleitung (5) angeordnet ist.

## Claims

1. A system for the distribution of a ready-to-use floor cleaning liquid (25) comprising a preferably fixed, high-capacity storage tank (1) for the preparation and/or storage of the floor cleaning liquid (25), a reservoir (14) for a cleaning concentrate (27) and a mobile automatic floor cleaner (19) with a tank (22) for the floor cleaning liquid (25), characterized in that the storage tank (1) comprises at least one liquid feed pipe (5) designed for connection to a water supply and at least one liquid discharge pipe designed (20) for connection to the tank (22) of the automatic floor cleaner (19) and communicates with a liquid connecting pipe (12) to the reservoir (14); in that water flowing into a part of the liquid feed pipe (5) or the storage tank (1) and cleaning concentrate (27) are intended to be mixed to form the floor cleaning liquid (25); in that the storage tank (1) is mounted in a frame (2) in such a way that an outflow opening (20a) thereof for the liquid discharge pipe (20) is situated above the tank (22) of the automatic floor cleaner (19) and the flow of floor cleaning liquid (25) from the storage tank (1) into the tank (22) of the automatic floor cleaner (19) is induced solely by gravity; and finally in that the storage tank (1) has a volume at least corresponding to the volume of the tank (22) of the automatic floor cleaner (19) and the dimensions of the outflow opening (20a) of the storage tank and the liquid discharge pipe (20) are at least such that the filling time for the tank (22) of the automatic floor cleaner (19) is 0.5 to 4 minutes and preferably 1 to 2 minutes.

2. A system as claimed in claim 1, characterized in that the liquid feed pipe (5) opens into the storage tank (1) through a valve unit (6) which opens and closes automatically in dependence upon the filling level of the storage tank (1).

3. A system as claimed in claim 1 or 2, characterized in that the valve unit consists of an electromagnetic valve (26) operatively connected by an electrical line (28) to a sensor or electrical switching element (29) which is disposed in the upper part of the storage tank (1) to detect the highest filling level envisaged and, on contact with the floor cleaning liquid in the tank (1), releases an electrical pulse to the electromagnetic valve (26) through the electrical line (28) so that the valve (26) opens and closes automatically in dependence upon the filling level in the storage tank (1).

4. A system as claimed in any of the preceding claims, characterized in that a return flow barrier (10) is provided in the liquid feed pipe (5).

5. A system as claimed in any of the preceding claims, characterized in that an injector (11) connected to the reservoir (14) by the liquid connecting pipe (12) is arranged downstream of the return flow barrier (10) in the liquid feed pipe (5).

6. A system as claimed in claim 5, characterized in that a replaceable nozzle (16) is integrated in the liquid connecting pipe (12).

7. A system as claimed in any of claims 1 to 4, characterized in that a pump (23) connected to the reservoir (14) by the liquid connecting pipe (12) is arranged downstream of the return flow barrier (10) in the liquid feed pipe (5).

8. A system as claimed in any of claims 5 to 7, characterized in that the liquid connecting pipe (12) is provided with a nonreturn valve (13).

9. A system as claimed in any of the preceding claims, characterized in that the liquid discharge pipe (2) is provided with a closure (21).

10. A system as claimed in any of the preceding claims, characterized in that an overflow outlet (18) is provided above the maximum permitted filling level of the storage tank (1).

11. A system as claimed in any of the preceding claims, characterized in that the overflow outlet (18) is positioned below the outlet opening (17) of the liquid feed pipe (5).

## Revendications

1. Système pour mise à disposition pratique d'un liquide de nettoyage des sols (25), qui comprend un réservoir de stockage (1) de grand volume, disposé de préférence localement fixe, pour la préparation et/ou le stockage de liquide de nettoyage des sols (25), un récipient de stockage (14) pour un concentré de produit de nettoyage (27), et un robot de nettoyage de sol (19) mobile avec un réservoir (22) pour le liquide de nettoyage des sols (25),
- le réservoir de stockage (1) présentant au moins une amenée de liquide (5) pouvant être raccordée à un réseau de conduite d'eau et au moins une évacuation de liquide (20) pouvant être reliée au réservoir (22) du robot de nettoyage des sols (19), ainsi qu'étant reliée par une tuyauterie au récipient de stockage (14), à l'aide d'une conduite de liaison pour liquide (12),
- et l'eau et le concentré de produit de nettoyage (27), arrivant dans un tronçon et ou un tronçon partiel de la conduite d'amenée de liquide (5) ou dans le réservoir de stockage (1), pouvant être mélangés pour produire un liquide de nettoyage des sols (25),
- et où, en outre le réservoir de stockage (1) est disposé dans un bâti (2) de manière qu'une ouverture d'évacuation de réservoir de réserve (20a), destinée à la conduite d'évacuation de liquide (20) se trouve au-dessus du réservoir (22) du robot de nettoyage des sols (19), et le flux de liquide de nettoyage de sols (25) issu du réservoir de stockage (1) étant soumis dans le réservoir (2) du robot de nettoyage des sols (19) à la seule force de la pesanteur,
- et où, enfin, le réservoir de stockage (1) présente au moins un volume correspondant au volume du réservoir (22) du robot de nettoyage des sols (19), et l'ouverture d'évacuation de réservoir de stockage (20a) ainsi que la tuyauterie d'évacuation de liquide (20) étant dimensionnées au moins de manière que le temps de remplissage du réservoir (22) du robot de nettoyage des sols (19) soit de 0,5 à 4 minutes, de préférence de 1 à 2 minutes.

2. Système selon la revendication 1,
caractérisé en ce que
la conduite d'amenée de liquide (5) débouche, par un ensemble à soupape (6), dans le réservoir de stockage (1), l'ensemble à soupape (6) s'ouvrant ou se fermant automatiquement, en fonction du niveau de remplissage dans le réservoir de stockage (1).

3. Système selon la revendication 1 ou 2,
caractérisé en ce que
l'ensemble à soupape est constitué d'une électrovanne (26) qui est reliée par une ligne électrique (28) à un capteur ou à un élément de commutation électrique (29), ce capteur ou cet élément de commutation électrique (29) étant disposé dans la zone supérieure du réservoir de stockage (1) pour appréhender le niveau maximal prévu du liquide et, en cas de contact avec le liquide dans le réservoir de stockage (1), envoyant, par l'intermédiaire de la ligne électrique (28), une impulsion électrique à l'électrovanne (26), de manière que l'électrovanne (26) s'ouvre ou se ferme automatiquement, en fonction du niveau de remplissage dans le réservoir de stockage (1).

4. Système selon l'une des revendications précédentes,
caractérisé en ce qu'
un blocage anti-retour (10) est disposé dans la conduite d'amenée en liquide (5).

5. Système selon l'une des revendications précédentes,
caractérisé en ce qu'
en aval du blocage anti-retour (10) monté dans la conduite d'amenée de liquide (5) est disposé un éjecteur (11) qui est relié au récipient de stockage (14) par la conduite de liaison de liquide (12).

6. Système selon la revendication 5
caractérisé en ce qu'
une buse (16) remplaçable est intégrée dans la conduite de liaison de liquide (12).

7. Système selon l'une des revendications 1 à 4,
caractérisé en ce qu'
en aval du blocage anti-retour (10), dans la conduite d'amenée de liquide (5) est disposée une pompe (23), reliée au récipient de stockage (14) par la conduite de liaison de liquide (12).

8. Système selon l'une des revendications 5 à 7,
caractérisé en ce que
la conduite de liaison de liquide (12) est dotée d'un clapet anti-retour (13).

9. Système selon l'une des revendications précédentes,
caractérisé en ce que
la conduite d'évacuation de liquide (20) est dotée d'une fermeture (21).

10. Système selon l'une des revendications précédentes,
caractérisé en ce qu'
au dessus du niveau de remplissage maximum admissible du réservoir de stockage (1) est prévue une évacuation de trop plein (18).

11. Système selon la revendication 10,
caractérisé en ce que
l'évacuation de trop plein (18) est disposée au-dessous de l'ouverture d'évacuation (17) de la conduite de liquide (5).
